# EUROPEAN PATENT SPECIFICATION

(11) **EP 4 199 642 B1**
(45) Date of publication and mention of the grant of the patent: **29.01.2025**
(21) Application number: 22213703.6
(22) Date of filing: 15.12.2022
(51) Int. Cl.: H04W 84/00, H04L 47/20, H04L 47/2441, H04W 28/02

(54) **WIRELESS COMMUNICATION SYSTEM FOR MOVING VEHICLES, SUCH AS TRAINS, WITH IMPROVED PRIORITIZATION**
DRAHTLOSES KOMMUNIKATIONSSYSTEM FÜR SICH BEWEGENDE FAHRZEUGE, WIE ETWA ZÜGE, MIT VERBESSERTER PRIORISIERUNG
SYSTÈME DE COMMUNICATION SANS FIL POUR VÉHICULES EN MOUVEMENT, TELS QUE DES TRAINS, AVEC PRIORISATION AMÉLIORÉE

(30) Priority: 17.12.2021 SE 2151550
(43) Date of publication of application: 21.06.2023
(73) Proprietor: ICOMERA AB, 411 03 Göteborg (SE)
(72) Inventor: KARLSSON, Mats, 660 50 Vålberg (SE); REINHAGEN, Rikard, 412 65 Göteborg (SE)
(74) Representative: Lind Edlund Kenamets Intellectual Property AB

(56) References cited:
- EP-A1- 3 273 746
- US-A1- 2016 381 596
- US-A1- 2018 048 691
- US-A1- 2021 176 183
- US-A1- 2022 021 720

## Description

### Technical field of the invention

The present invention relates to a wireless communication system for moving vehicles, such as trains.

### Background

The demands on wireless communication capabilities in today's society are increasing rapidly. In particular, fast and easily accessible communication is desired through hand-held devices over large areas. It is particularly challenging to achieve such communication for mobile devices which are moving, e.g. when moving over large distances with poor network coverage or when affected by unknown sources of noise interrupting a signal for communication, such as clients moving on e.g. trains, airplanes, and other types of moving vehicles. In particular, if a client, such as a mobile phone, moves over large areas the client has to connect to several base stations in order to maintain a sufficient connection for communication.
Further, e.g.train carriages are made of metal, and even the windows are normally covered with a metal film. Accordingly, train carriages are shielded compartments, and direct communication between terminal antennas within the carriages and externally located antennas is difficult to obtain.

The mobile nature of a client with respect to the base stations may also introduce several potential sources of communication performance degradation. Such sources may derive from complex terrain, competition for available channels, or the source may be an unknown source of noise related to e.g. radio-frequency interference.

At the same time, there is today an increasing demand from passengers to be able to communicate through mobile phones and other handheld terminals when travelling on e.g. trains, and also to be able to get access to the Internet with laptops, PDAs etc. Further, with the new smartphones, and the way these are used, with e.g. continuously operating applications, many phones are active at all times, meaning that many handovers are required when the train moves. Even though this problem is common for all moving vehicles, it is especially pronounced for vehicles moving at high speed, such as trains and airplanes, and trains are in addition facing problems with poor line-of-sight between the base stations and the train. This puts a strain on the wireless network infrastructure, leading to poor performance.

To this end, moving vehicles, such as train carriages, are often provided with an external antenna connected to a repeater unit within the carriage, which in turn is connected to an internal antenna. Hence, the communication between the passengers' terminals and the operator antennas outside the vehicle occurs through the repeater unit. Similarly, it is known to provide a mobile access router for data communication, also connected both to an external antenna and an internal antenna, in each carriage, in order to provide Internet access on board the vehicle. Such mobile access router solutions are e.g. commercially available from the applicant of the present application, Icomera AB, of Gothenburg, Sweden, and are also disclosed in EP 1 175 757 by the same applicant. This method has greatly improved the reliability of high-bandwidth wireless communication for trains and other large vehicles. However, this solution may still be insufficient to obtain an optimal transmission performance, especially for large data volumes. Trains and other moving vehicles often pass through areas with bad radio coverage, and present solutions are often unable to handle the required traffic.

Further, e.g. the current rising trend of streaming media uses far more data per minute of journey per passenger than older uses of the Internet, such as browsing text- and image-based sites like Facebook, or checking and responding to email.

As a remedy to this, a known system for allocating bandwidth in the internal networks within the trains has been to employ a bandwidth cap, also called Fair Access Policy or Fair Usage Policy. Hereby users are allowed to utilize a certain "free" amount of data during a session, e.g. 25MB, 75MB, 200MB etc., depending on the service provider. However, once the "free" amount of data has been used, the session is either terminated or the connection speed is significantly reduced for the end user, alternatively the end user might be allowed more data for an excess charge.

However, this solution is limited in many ways, and does also not completely solve the problems associated with the lack of available bandwidth during the full trip. For example, it is common that during the initial period of the trip, the majority of clients are often connected and all of them are able to use the full amount of "free" data for certain period of time. This puts considerable strain on the communication system during certain time periods, and an inefficient use of the available bandwidth utilization. Even more, there exists a possibility that users may inadvertently consume much bandwidth by running very active applications, thus reducing the performance for other users and making inadvertent use of the "free" data, thereby limiting the possibility to use it for more important purposes later on.

Another known solution for restricting the use is to charge a fee, charged e.g. in relation to the time when the communication system has been used, or the amount of data that has been communicated. Even though this may be efficient to limit the use of the communication system, it provides extra initial hurdles for the users, and also severely reduces the travel experience and user satisfaction.

In EP 3177064, by the same applicant, there is disclosed a method for allocating bandwidth in accordance with a pocket policy, so that certain data stream types are prioritized over other data stream types. Even though this is a significant improvement in relation to the above-discussed problems, there is still a need for further improvements in this field.

There is therefore a need for an improved method and system for communicating with clients on moving vehicles, and in particular trains, allowing increased capacity, capacity utilization, quality and/or cost-efficiency. Even though the above discussion is focused on trains, similar situations and problems are encountered in many other types of moving vehicles, and in particular moving passenger vehicles, such as buses, ships and airplanes.

EP 3273746 discloses a method for allowing data communication for all data types when a trackside network is available, but to restrict communication to only some, prioritized data types when a trackside network is not available, and communication is possible only via e.g. a cellular network.

US 2022/0021720 discloses a data communication method where prioritized data packets are placed in prioritized data buffers, which are served prior to or at a higher rate than buffers with lower priority.

US 2021/0176183 discloses a communication system that arbitrates access between multiple ingress channels to one output channel.

US 2016/0381596 discloses a MAC design for a Ku-band mobile wireless mesh network.

### Summary of the invention

It is therefore an object of the present invention to provide a method for wireless communication and a wireless communication system for moving vehicles, and in particular a train, which alleviates all or at least some of the above-discussed drawbacks of the presently known systems.

This object is achieved by means of a wireless communication method and system for a moving vehicle, such as a train as defined in the appended claims.

According to a first aspect of the invention, there is provided a method for wireless communication between a router in a moving vehicle, such as a train, and a stationary communication server outside the moving vehicle through at least one external mobile network on at least one link, the method, performed in at least one of the stationary communication server and the router, comprising:
providing a first output buffer and a second output buffer;
receiving data packets of a data stream to be transferred on said at least one link;
determining whether said data stream is of a data type belonging to a set of prioritized data types;
selecting, in case it has been determined that the data stream is of a data type belonging to the set of prioritized data types, the first output buffer for said data packets;
selecting, in case it has been determined that the data is of a data type not belonging to the set of prioritized data types, the second output buffer for said data packets; and
transferring the data packets to the selected output buffer, for subsequent transmission of the data packets on said at least one link.

Hereby, prioritization and optimization are obtained by the provision of two buffers, such as two queues. By allowing only certain prioritized data types to use the first one, this buffer will work as a fast track or priority queue, allowing the data packets sent to this buffer to be transmitted much faster than data packets sent to the second buffer, or bulk queue. The prioritized data types may e.g. be voice over IP (VoIP), gaming communication, transaction data, such as payments, Remote Authentication Dial-In User Service (RADIUS), etc. The prioritized data types will typically contain relatively small amounts of data, which is bursty or has low-throughput data, thus requiring low bandwidth, but with a need for low latency. The non-prioritized data types may e.g. be high volume streaming data, such as video.

Preferably, data streams of data types belonging to the set of prioritized data types have lower amounts of data, and requires lower bandwidth, compared to data streams of data types not belonging to the set of prioritized data types. This ensures that there is only limited traffic going through the first buffer.

Hereby, the prioritized data types will be served quicker than the non-prioritized data types, through the "fast lane", allowing minimization of latency for latency/jitter critical traffic, such as VoIP, whereas other traffic, such as video streaming, will go through the "ordinary line".

Due to this optimization of the IP traffic, the overall quality of service (QoS) and end user experience will be greatly improved.

At least one of the first and second buffer may function as a queue, wherein data packets placed first in the queue will be transmitted first, in accordance with a first in, first out (FIFO) principle.

However, the use of separate buffers for different data types also makes it possible to control different data types more efficiently and in an easier way. For example, the first buffer may be arranged as a priority queue. To this end, the data types of the prioritized data types may further be assigned a priority value, and wherein the first buffer may be operated as a priority queue in which data packets of a data type with higher priority rank are served prior to data packets of a data type of a lower priority rank.

It is also possible to provide further restrictions on the non-prioritized data sent through the second buffer, such as restricting the bandwidth for each data stream being sent through the second buffer to a maximum bandwidth value. Hereby, all high bandwidth streams could be limited to a certain, maximum, bandwidth, such as to 2 Mbit/s. The maximum bandwidth could also be dynamically adjusted, in accordance with e.g. the total bandwidth that is accessible at any time.

The determination of which packet data types that should be prioritized, i.e. which should which packet data types to be included in the set of prioritized data types, may be predetermined and predefined. In such embodiments, the set is static, and will not change over time. However, it is also possible to adjust the set over time, i.e. to make it dynamic. The set could e.g. be adjusted in dependence of time of day, day of week, number of clients connected to the networking router, available total bandwidth, etc. or a combination thereof. In such embodiments, the networking conditions obtained for a specific wireless data packet type may differ depending on time of day, day of week, etc. By having a dynamic determination, and dynamically determined set of prioritized packet data types, the wireless communication service provider may customize the networking conditions so to provide best possible utilization of the full bandwidth, i.e. some train journeys and the like might be less crowded than others, and thus the set of prioritized packet data types may be include packet data types that are less prioritized, whereas such data types may be excluded from the set of prioritized data types for fully booked trains, planes and the like. For example, if data types are assigned a priority from 1-5, where 1 is the highest priority and 5 the lowest priority, the set of prioritized data types may include data types with priority 1 only. However, the set of prioritized data types may alternatively, or periodically, include also data types with priority 2, and optionally also data types with priority 3, and optionally also data types with priority 4.

The dynamic adjustment may be utilized to adjust which data types to be assigned to the first buffer, and thereby to be prioritized.

If the forwarding of packets out from the first buffer is also determined based on priority, this determination may also be either static or dynamically adjusted.

Other ways of optimizing the different traffic types are also feasible, and can easily be implemented based on the division of the traffic into the separate buffers.

The method may be used and executed in the mobile router on the vehicle, to control outgoing data streams to be forwarded to the stationary communication server, or in the stationary communication server, to control outgoing data streams to be forwarded to the mobile router, or, preferably, in both the mobile router and the stationary communication server. The stationary communication server may e.g. be an aggregation server when the communication with the on-board router takes place over multiple separate paths. By operating the method on both sides, the traffic is optimized in both directions. However, in applications where most data is sent only in one direction, the method may be operated only on the side transmitting the most data. For example, in vehicles used for surveillance and the like, data will be captured by a camera in the vehicle, and be streamed to the stationary communication server. For such vehicles, most of the data will be sent from the vehicle. In other situations, such as on many passenger vehicles, the bulk of the data will be streaming video, which is sent from the stationary communication server to the mobile router in the vehicle.

The determining if the data stream has a data type belonging to the set of prioritized data types preferably comprises determining at least one of a destination, a size and a pattern of the data stream, and using this for identification of a data type. Most preferably, the size and pattern of the data stream is used to determine the data type. The size and pattern provide a silhouette of the traffic, which can be used to distinguish between data types, as is per se known. However, other ways of distinguishing between different data types are also feasible, as exemplified in the previously mentioned EP 3177064.

The data pattern may be used to determine the type of data packet, without the need to identify or know the content of the data. For example, it is possible to determining if the packet stream is related to web browsing, e-mailing, computer gaming, media-streaming, such as video, voice over IP (VoIP), VPN communication, etc. by such pattern analysis, and thereby determining a priority to the data packets of a stream based on the data type. For example, a stream of small packets every 15-25 milliseconds in both directions can with high probability be recognized as a VoIP call.

Thus, the step of determining if a stream of wireless data packet is included in a set of prioritized data types preferably comprises determining at least one of a source, a destination, a size and pattern of the wireless data packets, and using this for identification of a data packet or data stream type.

Additionally or alternatively, the step of determining a packet data type may comprise identification of a data packet or data stream type for said data packet based on deep packet inspection.

The set of prioritized data types does preferably not include video data streams. This data type is consequently non-prioritized, and not allowed to use the first buffer.

. The set of prioritized data types preferably includes at least one of a voice-over-IP (VoIP) data stream, a transaction data stream, an authentication data stream and a VPN data stream. Such data types are consequently prioritized, and allowed to use the first buffer.

In particular, it is of interest to identify if the data packet type is a video data packet type, and to not include this data type in the set of prioritized data types, thereby restricting throughput of such data packets by allocating the second buffer for this data type. Since video, e.g. in streaming services, is normally responsible for a very large part of the data traffic, limiting allocated bandwidth, response time etc. for this packet type is normally very efficient to improve bandwidth availability etc. for other packet types. It may, additionally or alternatively, be of great interest to identify data types which are most in need for good quality and high bandwidth, and make these data types part of the set of the prioritized data types, thereby provide more bandwidth, faster response time etc. to such packet types. Such packet types to be prioritized may e.g. be voice-over-IP (VOIP) data packets and VPN data packets.

Thus, the present invention may e.g. be used for allocating a faster and more reliable channel, through the first buffer, for certain applications such as VoIP and a slower and less reliable channel, through the second buffer, e.g. for streaming video, computer gaming or P2P-downloading. Further, the identification of the data types, to determine whether a data type is part of a set of prioritized data types, may be based on patter analysis, but additionally or alternatively, it may be based on source and destination of the packets, ports used, protocol, IP-addresses, etc. The identification may also be performed via a deep packet inspection (DPI), which is per se known in the art, wherein specific applications associated with the data packets are identified/classified.

Previously, it has been known to manage bandwidth according to conditions imposed on the packet streams, which is often referred to as traffic shaping or packet shaping. Such techniques can be found in e.g. US2005/0172008, EP1912385, US7061860, US2004/0111461, Adaptiband^{™} by XRoads Networks, Radware's Deep Flow Inspection^{™} and NAVL by Procera Networks. However, such traffic shaping requires a lot of processing power, is often both cumbersome and costly to use.

However, by means of the present invention, a coarse but very efficient optimization of the traffic can be obtained by the selection between two or more different buffers, whereby packets of high priority are forwarded to a specific, dedicated buffer - a fast lane or priority queue - whereas packets of low or lower priority are forwarded to a default buffer - the ordinary lane or bulk queue.

Wireless communication networks are nowadays by necessity provided on trains and other passenger carrying vehicles. As stated in the background section, the demand from passengers to be able to communicate via handheld devices or laptops when travelling is ever-increasing. The present invention is based on the realization that current bandwidth management techniques employed on wireless networks within e.g. trains were based on old requirements, and originated from a time before smart phones, tablets and extremely portable laptops. The increased demand for bandwidth has been addressed with efforts to increase the overall available bandwidth, or by introduction of general restrictions, such as a specified maximum data limit for each user, by charging by the hour or by amount of data. However, none of these solutions are satisfactory in the long run. The present invention mitigates the problem associated with unfair bandwidth usage, aka "hogging", i.e. when one or a small number of users "hog" all the bandwidth. Another benefit of the inventive system or method is that the full bandwidth of the total available bandwidth may be utilized in an optimal way. Moreover, the present invention allows for a more versatile, dependable and fair usage of the onboard network by prioritizing certain activities or applications and restricting others. For example it might be more beneficial to satisfy business travelers, who may work during the trip, and ensure a certain QoS associated with applications normally used by business travelers, by restricting bandwidth allocation and/or prioritization and throttling the connection speed for users attempting to stream High Definition videos etc, which may be of less priority. Thus, static bandwidth caps or limits may be removed in favor of the simpler and yet highly effective method as defined by the present invention improving overall system adaptability, and in the end providing a better Quality of Experience (QoE).

As discussed in the foregoing, different prioritized data types may be assigned different priorities, and may be prioritized differently in the first buffer. E.g. VoIP may have the highest priority, transaction data and authentication data a second highest priority, and VPN data a third highest priority, so that VoIP is prioritized over all the others, and transaction data and authentication data is prioritized over VPN data.

It is also feasible to use more than two separate buffers, such as three, four or five different buffers. Hereby, different data types may, in case three buffers are used, be assigned to the first, second or third buffer, depending on their prioritization. Thus, the one or several data types of highest priority may be assigned to the first buffer, the one or several data types of somewhat lower priority may be assigned to the second buffer, and data types of lowest priority may be assigned to the third buffer. In such embodiments, the method may further comprise the step of determining whether said data stream is of a data type belonging to a second set of prioritized data types, and selecting, in case it has been determined that the data stream is of a data type belonging to the second set of prioritized data types, a third output buffer for said data packets. In an embodiment with three buffers, and again having data types assigned a priority from 1-5, where 1 is the highest priority and 5 the lowest priority, the data types with priority 1 may e.g. be sent to a buffer A, the data types with priority 2 or 3 may be sent to a buffer B, and the data types with priority 4 or 5 may be sent to buffer C.

In one exemplary embodiment, the method further comprises a step of, if the wireless data packet type cannot be identified, selecting the second buffer for such packets. However, alternatively, packets of this data type may be blocked or dropped.

In one embodiment, the data packets are transmitted from the first and second output buffers with essentially the same output rate. Thus, each of the buffers may have the same capacity and be assigned the same bandwidth. The same output rate may also be provided for any third or subsequent buffer.

The buffers may transmit on the same link, and consequently share the bandwidth of the link. However, the buffers may also transmit on different links.

Prioritizing may here comprise assignment of streams to different available links, so that stream with higher priority, forwarded through the first buffer, is assigned with a link having higher bandwidth, less latency or the like, and a stream with less priority, forwarded through the second buffer, is assigned to links having less bandwidth, higher latency or the like.

In case the same link or links is/are used for both the first and second buffer, packets from the buffers may be sent on the link(s) in turns. However, the first buffer may also be prioritized, so that packets from the first buffer are forwarded faster or with higher rate. Prioritizing may also be related to how actively streams are re-allocated to new links when the performance of the current link is deteriorated. For example, streams from the first buffer may be re-allocated as soon as one or more threshold(s) in respect of performance has been passed, whereas less prioritized streams, such as streams from the second buffer, may be re-allocated based on other threshold(s), or not re-allocated at all. In this way, the most prioritized streams may be allocated to the best performing links. It is also possible to use some of the links more sparsely, thereby saving capacity for re-allocation when the need arises. Still further, the prioritization may be different on uplink and downlink, so that streams are higher or lower prioritized on uplink or downlink, depending on the available capacity.

Further, the stationary communication server may be an aggregation server, arranged to aggregate data packets of a stream transmitted on different links, and wherein at least one of the first and second buffer is arranged to transmit data packets on at least two simultaneously useable links.

The router and the stationary communication server are preferably connected through a plurality of exterior mobile networks, which are simultaneously useable. Also, the router is preferably arranged to communicate with the communication server on at least two different data links (communication routes) having different characteristics, and to automatically separate the communication traffic between the data links based on an evaluation of e.g. response time when a packet triggering an automated response is sent, such as a ping message. For example, this can be made as discussed in EP 2943011, by the same applicant, said document hereby being included in its entirety by reference. The data streams are then forwarded on one or several links to and from a dedicated external server, which may be referred to as an aggregation server or gateway. The different links thereby form a single virtual link between the router and the gateway. The communication can be automatically optimized based on the evaluation, and also optionally on other conditions, such as price, speed, latency, etc. Thus, in addition to the response time, and assignments may be made based on other static or dynamic parameters, such as signal strength and the like. Such further optimizations are per se known from EP 1 175 757 by the same applicant. An automatic selection is then made among the available data links to use the most efficient combination. Hence, a seamless distribution of the data among the different data links is obtained.

The router may use any available data links, such as one or more of e.g. GSM, Satellite, DVB-T, HSPA, EDGE, 1X RTT, EVDO, LTE, Wi-Fi (802.11) and WiMAX. The multiple links may be provided by using different telecommunication standards, different operators, different frequency bands, and the like, and the links may, at the receiver side be combined into one virtual network connection.

The selection of links is preferably made once for each data stream. However, re-selection for data streams that have failed may also be made. Further, data streams may also be split among two or more data links, e.g. by transferring a first part of a data stream on one data link to begin with, and then continue the transfer of the rest of the data stream on another data link, based on a re-assignment decision. Re-selection and/or re-assignment may also be made based on other criteria than complete failure of the presently used data link, such as when the evaluated quality of the link presently used is significantly deteriorated, falls below a certain threshold, or the like.

The above-discussed method can be executed by a controller, such as a processor, in the router and/or the stationary communication server, and being equipped with appropriate hardware and/or software.

The "router" may be a networking router, which is a machine that forwards data packets between computer networks, on at least one data link in each direction. The router may be a mobile access router, and preferably a mobile access and applications router.

According to another aspect of the present invention, there is provided a wireless communication system for a moving vehicle, such as a train, comprising:
at least one router in the moving vehicle, said router being configured for receiving and transmitting wireless data communication to and from a stationary communication server outside said moving vehicle through at least one external mobile network on at least one link via at least one antenna, wherein at least one of the stationary communication server and the router, comprises:
a first output buffer and a second output buffer;
a traffic classifier arranged to analyze received data packets of a data stream to be transferred on said at least one link, and to determine whether said data stream is of a data type belonging to a set of prioritized data types; and
a controller arranged to select, in case it has been determined that the data stream is of a data type belonging to the set of prioritized data types, the first output buffer for said data packets, and to select, in case it has been determined that the data is of a data type not belonging to the set of prioritized data types, the second output buffer for said data packets.

With this aspect of the invention, similar advantages and preferred features are present as in the previously discussed first aspect of the invention.

These and other features and advantages of the present invention will in the following be further clarified with reference to the embodiments described hereinafter.

### Brief description of the drawings

For exemplifying purposes, the invention will be described in closer detail in the following with reference to embodiments thereof illustrated in the attached drawings, wherein:
Fig 1 is a schematic illustration of a train having a wireless communication system in accordance with an embodiment of the present invention;
Fig 2 is a schematic illustration of the forwarding of packets in the system of Fig. 1 in a prioritized and non-prioritized channel, in accordance with an embodiment of the present invention; and
Fig 3 is a schematic illustration of the traffic prioritization obtained by the present invention.

### Detailed description of preferred embodiments

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the detailed embodiments described in the following are related to trains. However, it is to be acknowledged by the skilled reader that the method and system are correspondingly useable on other moving vehicles, such as buses, ferries, airplanes and the like.

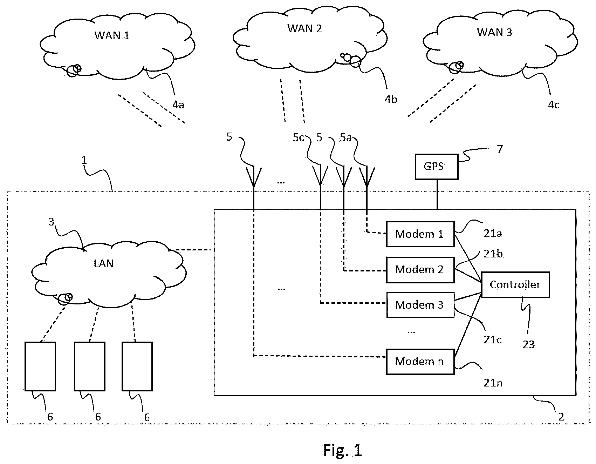

In Fig. 1 a schematic illustration of a vehicle 1, such as a train, having a communication system is provided. The communication system comprises a data communication router, a mobile router 2 for receiving and transmitting data between an internal local area network (LAN) 3, and one or several external wide area networks (WANs) 4a, 4b, 4c. Communication to and from the WANs is provided through one or several antennas 5 a-n arranged on the train, the antennas may be arranged on the roof of the train, on window panes of the train, etc. Two or more data links are available, either between the train and one of the WANs, and/or by using several WANs simultaneously.

The LAN is preferably a wireless network, using one or several internal antennas to communicate with terminal units 6 within the vehicle. It is also possible to use a wired network within the vehicle. The LAN may be set-up as wireless access point(s). The client(s) 6 may be computing devices such as laptops, mobiles telephones, PDAs, tablets and so on.

The data communication router comprises a plurality of modems 21 an. Assignment of data streams to different WANs and/or to different data links on one WAN is controlled by a controller 23. The controller is preferably realized as a software controlled processor. However, the controller may alternatively be realized wholly or partly in hardware.

The system may also comprise a receiver for receiving GNSS (Global Navigation Satellite System) signals, such as a global positioning system (GPS) receiver 7 for receiving GPS signals, indicative of the current position of the vehicle.

The data communication router may also be denominated MAR (Mobile Access Router) or MAAR (Mobile Access and Applications Router).

The external wide area network(s) (WAN) may include a plurality of trackside base stations, such as trackside access points, distributed along a vehicle path of travel, i.e. the rail, for communication in compliance with a Wireless Local Area Network (WLAN) standard, such as an 802.11 standard, is illustrated in more detail. Such base stations/access points may be connected to a controller via a wired or wireless connection, such as via a fiber connection. The coverage areas may be overlapping, allowing the mobile router of the vehicle to access several access points simultaneously, and thereby distribute the communication between several data links.

The mobile router may also be connected to other external networks, and may consequently simultaneously distribute the communication also over these networks, e.g. via GSM, Satellite, DVB-T, HSPA, EDGE, 1X RTT, EVDO, LTE, Wi-Fi and WiMAX.

In terms of general operation of the communication system, the router and the stationary (remote) communication server are preferably connected through a plurality of exterior mobile/cellular networks (provided by the base stations), which are simultaneously useable. Also, the router is preferably arranged to communicate with the stationary communication server on at least two different data links (communication routes) having different characteristics (e.g. on different frequency bands), and then to automatically separate the data traffic between the data links based on an evaluation of link quality. The evaluation of link quality may for example be executed as disclosed in WO 2015/169917, by the same applicant.

The data streams are then forwarded on one or several links to and from a dedicated external server, which may be referred to as an aggregation server or gateway. The different links thereby form a single virtual link between the router and the gateway.

The router 2 is arranged to communicate on several different communication routes (data links) having different characteristics, such as different communication routes to and from the exterior mobile network 4, e.g. owned by different network operators or by the same network operator. The various data streams can be transferred and distributed among the plurality of routers on the different data links, based on e.g. available bandwidth, or other performance parameters, as discussed in the foregoing, and as per se disclosed in EP 2 943 011 by the same applicant.

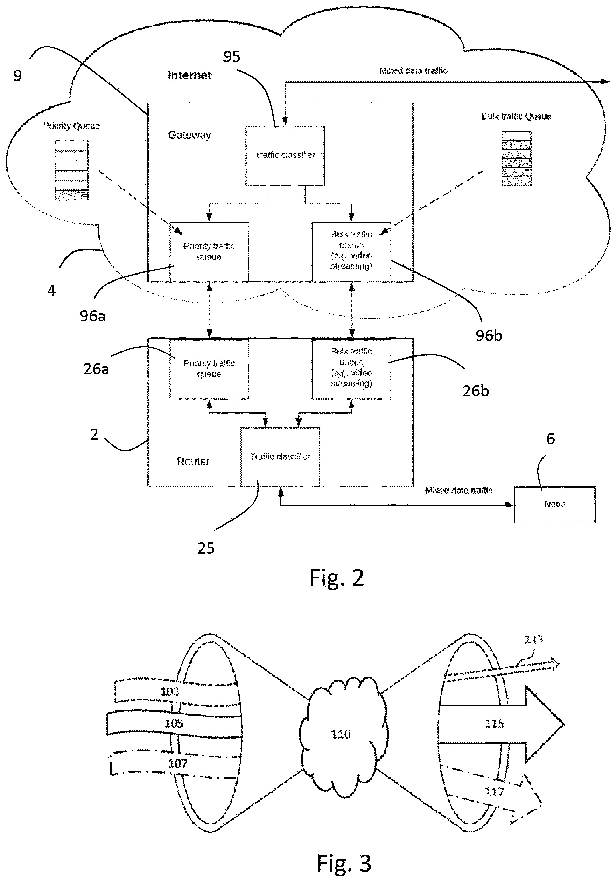

The system further allows certain packet data streams of certain data types to be prioritized over other packet data streams of other data types. This will now be discussed in more detail with reference to Fig. 2.

The prioritization of the data transfer may be performed in the mobile router 2, for prioritization of the data streams going from the train to the stationary server. Additionally, or alternatively, the prioritization of the data transfer may be performed in a stationary server 9, such as in an aggregation server, for prioritization of the data streams going from the stationary server to the train. In the illustrative example of Fig. 2, prioritization is performed in both directions, i.e. both in the mobile router 2 and in the stationary server 9.

To this end the mobile router 2 is arranged to determine whether the data stream is of a data type belonging to at least one set of prioritized data types. In the illustrative example, only on set of prioritized data types is used. However, it is also feasible to have e.g. a set of most prioritized data types, and a different set of somewhat less prioritized data types. More sets of differently prioritized data types may also be provided.

The determination of the data type of a data type, and the determination of whether the determined data type belongs to one of the one or more sets of prioritized data types can e.g. be based on a destination and/or a size and a pattern of the data stream. Most preferably, the size and pattern of the data stream is used to determine the data type. The size and pattern provide a silhouette of the traffic, which can be used to distinguish between data types. However, other ways of distinguishing between different data types are also feasible.

The determination of whether the data type belongs to one of the one or more sets of data types is here made in a traffic classifier 25. The traffic classifier may be a separate component in the router 2, or be an integrated part in the controller 23.

The router 2 further comprises a first output buffer 26a and a second output buffer 26b. However, more than two buffers may also be used, such as three or four buffers.

When a data stream is received by the router, it is determined by the traffic classifier 25 whether the data stream is of a data type belonging to a set of prioritized data types. Based on this, the traffic classifier determines whether to forward the data stream to the first or second buffer. If it has been determined that the data stream is of a data type belonging to the set of prioritized data types, the first output buffer is selected for the data stream. If it has been determined that the data is of a data type not belonging to the set of prioritized data types, the second output buffer is selected for the data stream. The data stream is then transferred to the selected output buffer, for subsequent transmission of the data packets on the at least one link.

Hereby, the first buffer operates as a fast lane, or priority traffic queue, handling only the prioritized data traffic, which is consequently sent out at a fast rate. The second buffer operates as an ordinary lane, or bulk traffic queue, handling more data packets, and where data packets are sent out at a slower rate.

The prioritized data types may e.g. be voice over IP (VoIP), gaming communication, transaction data, such as payments, Remote Authentication Dial-In User Service (RADIUS), etc. The prioritized data types will typically contain relatively small amounts of data, which is bursty or has low-throughput data, thus requiring low bandwidth, but with a need for low latency. The non-prioritized data types may e.g. be high volume streaming data, such as video.

Similarly, the stationary server 9, such as an aggregation server or other gateway, may be arranged to determine whether the data stream is of a data type belonging to at least one set of prioritized data types. In the illustrative example, only on set of prioritized data types is again used. However, it is also feasible to have e.g. a set of most prioritized data types, and a different set of somewhat less prioritized data types. More sets of differently prioritized data types may also be provided.

The determination of the data type of a data type, and the determination of whether the determined data type belongs to one of the one or more sets of prioritized data types can here be made in the same way as in the mobile router 2.

The determination of whether the data type belongs to one of the one or more sets of data types is here made in a traffic classifier 95. The traffic classifier may be a separate component in the server 9, or be an integrated part of a main controller in the server.

The server 9 further comprises a first output buffer 96a and a second output buffer 96b. However, more than two buffers may also be used, such as three or four buffers.

When a data stream is received by the server/gateway 9, it is determined by the traffic classifier 95 whether the data stream is of a data type belonging to a set of prioritized data types. Based on this, the traffic classifier determines whether to forward the data stream to the first or second buffer, in the same way as in the mobile router 2.

The buffers may buffer may function as a queue, wherein data packets placed first in the queue will be transmitted first, in accordance with a first in, first out (FIFO) principle. However, one or more of the buffers may also be operated as a priority queue. To this end, the data types of the prioritized data types may further be assigned a priority value, and wherein the first buffer may be operated as a priority queue in which data packets of a data type with higher priority rank are served prior to data packets of a data type of a lower priority rank.

It is also possible to provide further restrictions on the non-prioritized data sent through the second buffer, such as restricting the bandwidth for each data stream being sent through the second buffer to a maximum bandwidth value. Hereby, all high bandwidth streams could be limited to a certain, maximum, bandwidth, such as to 2 Mbit/s. The maximum bandwidth could also be dynamically adjusted, in accordance with e.g. the total bandwidth that is accessible at any time.

It is also feasible to use more than two separate buffers, such as three, four or five different buffers. Hereby, different data types may, in case three buffers are used, be assigned to the first, second or third buffer, depending on their prioritization. Thus, the one or several data types of highest priority may be assigned to the first buffer, the one or several data types of somewhat lower priority may be assigned to the second buffer, and data types of lowest priority may be assigned to the third buffer. In such embodiments, the method may further comprise the step of determining whether said data stream is of a data type belonging to a second set of prioritized data types, and selecting, in case it has been determined that the data stream is of a data type belonging to the second set of prioritized data types, a third output buffer for said data packets. In an embodiment with three buffers, and again having data types assigned a priority from 1-5, where 1 is the highest priority and 5 the lowest priority, the data types with priority 1 may e.g. be sent to a buffer A, the data types with priority 2 or 3 may be sent to a buffer B, and the data types with priority 4 or 5 may be sent to buffer C.

In one embodiment, the data packets are transmitted from the first and second output buffers with essentially the same output rate. Thus, each of the buffers may have the same capacity and be assigned the same bandwidth. The same output rate may also be provided for any third or subsequent buffer. In order to make some buffers, such as the first buffer, faster than others, only a limited number of data types are preferably included in the set(s) of prioritized data types, thereby limiting the traffic through these buffer(s).

However, other ways of making the prioritized buffer(s) faster may also be used, as have been discussed in the foregoing, such as by assigning different links to the buffers, re-allocating the buffers to new links in different order, etc.

Fig. 3 illustrates a simplified schematic traffic shaping process, so to provide a basic conceptual understanding. In the exemplary embodiment illustrated in Fig. 3, there are three flows/streams of data packets 103, 105, 107 entering a network edge device 110, such as the router 2 or the gateway 9. In this particular exemplary embodiment, data stream 103 is a High Definition video stream, data stream 105 is a business application stream, such as VPN communication, and 107 is a VoIP stream. Upon reaching the network edge device 110, an internal control unit (such as e.g. 25 or 95 in Fig. 2), determines if the data stream belongs to a set of prioritized data types, and allocates the data stream to one of the buffers based on this. As illustrated by arrows 113, 115, 117 the incoming data packets/data streams, 103, 105, 107 have been differently prioritized, and assigned different buffers. The data stream representing an HD-video stream has a significantly reduced throughput, in favor of the business application, which enjoys the most throughput. The VoIP outgoing data stream 117 may be prioritized in the same way as the business application data, or be assigned to a separate buffer. Preferably applications like VoIP, requiring a certain bandwidth and/or priority to ensure a minimum quality is allocated with at least that minimum bandwidth, but if more bandwidth is available more bandwidth is allocated for the VoIP. By configuring the predefined packet streams, and associating them with a Quality of Service (QoS) measure, the traffic control can be very efficient.

Furthermore, the sets of prioritized data types, and/or the prioritization within the queues in the buffers, may be dynamic, and may e.g. be configured to depend on time of day, day of the week, number of clients connected, total available bandwidth, etc. Therefore, the bandwidth allocation and/or prioritization for specific software applications may be very dynamic.

By means of the above-discussed method and system, the end result will be throttling of certain bandwidth-heavy applications such as high definition media streaming, which may not be of high priority, whereas less bandwidth demanding applications are promoted. Thus, more passengers/clients may utilize the network, provided within the train, much more efficiently.

Additionally, by only analyzing packet sizes and packet patterns of packet streams received by the router, the data stream type can be determined even for encrypted data. Thus, passengers connected via a Virtual Private Network (VPN) tunnel will not impose a problem for the analysis. Moreover, the privacy of the passengers remains uncompromised. Thus, contrary to conventional deep packet inspection, it is here only a need to determine a packet type or type of data stream, whereas the actual content is of no interest. This makes it possible to make the determination easier, faster and more cost-efficient.

It is thus possible to prioritize data streams efficiently and dynamically. However, even static prioritization provides a very efficient measure to improve the quality of service experienced on the train.

Some exemplary different data types may e.g. be prioritized as discussed in the following, and as shown in the following table.

**Table: Example of data stream type characteristics and prioritization**

| Data stream type | Acceptable latency | Quantity of data | BW at high capacity | BW at low capacity | BW at very low capacity | Priority |
|---|---|---|---|---|---|---|
| Voice (VoIP) | A few ms | Low | High | High | High | High |
| Video | > 10 s | High | Medium | Low | None | Low |
| http and https | > 5 s | Low-high | High | Medium | None | Medium |
| Payment | ~ 2-5 s | Low | High | High | High | High |

Voice data streams, such as VoIP calls, are very sensitive to latency. A latency of only a few milliseconds will be experienced as very annoying for users. At the same time, the data streams are typically very long in time, but the data quantity is relatively low. Thus, voice may be highly prioritized, and allocated the first (fast) buffer at all times, regardless of whether the total available capacity is high, low or even extremely low.

In the same way data streams related to payment services may be highly prioritized, and allocated to the first (fast) buffer. Payment data streams are typically having low quantities of data. Payment services, such as paying for services, ordering tickets, etc, are often aborted relatively quickly. Thus, the latency should not be more than 2-5 seconds, depending on the service providers.

Video data streams are often large, having high quantities of data. On the other hand, since the receiver normally buffers data, quite long latency times are acceptable. Also, providers of video data streams normally adjust the resolution and quality of the video data stream in accordance with the transmission capacity. Thus, if high bandwidth is available, data streams of high definition may be sent, whereas if moderate or low bandwidth is available, data streams of lower definition will be used. Video data streams will typically have low priority, and normally be assigned to the second (ordinary) buffer, but may also be entirely stopped when the bandwidth capacity is low. Further, the bandwidth capacity may be further restricted, also at times when the bandwidth capacity is high, since this will make the data stream provider transmitting the data stream with lower definition. This is beneficial when the available bandwidth varies greatly over time, which is typically the case at e.g. trains, but also lowers the overall data quantities sent to and from the train, thereby lowering the strains on the communication system and saves costs.

Other type of http and https data, such as reading newspapers on-line, sending e-mails, etc, are also relatively insensitive to latency, and the data streams are often relatively short and with relatively low quantities of data. For example a newspaper is typically forwarded as a plurality of separate data streams. Preferably, such data streams are allocated to the second buffer.

The present invention has here been disclosed in relation to trains, where it is considered to be particularly advantageous. However, it may also be implemented and used on other moving vehicles, and in particular vehicles intended for passenger traffic, such as buses, ferries, airplanes, etc.

The invention has been described with reference to specific embodiments. However, several variations of the communication system are feasible. For example, more than two buffers may be used, and more than one set of prioritized data types may be used. Further, the set(s) of data types may be static, but may also be dynamically altered over time. Further, in addition to the use of different buffers, additional measures, such as restriction of bandwidth for certain data types, prioritization in the queues of the buffer(s) in dependence of the prioritization, etc, may also be used. Further, data types may be identified in many different ways, as already exemplified. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A method for wireless communication between a router (2) in a moving vehicle (1), such as a train, and a stationary communication server (9) outside the moving vehicle (1) through at least one external mobile network (4a, 4b, 4c) on at least one link, the method, performed in at least one of the stationary communication server (9) and the router (2), comprising:
receiving data packets of a data stream (103, 105, 107) to be transferred on said at least one link; and
determining whether said data stream (103, 105, 107) is of a data type belonging to a set of prioritized data types;
**characterized in that** the method comprises:
providing a first output buffer (26a, 96a) and a second output buffer (26b, 96b);
selecting, in case it has been determined that the data stream is of a data type belonging to the set of prioritized data types, the first output buffer (26a, 96a) for said data packets;
selecting, in case it has been determined that the data stream is of a data type not belonging to the set of prioritized data types, the second output buffer (26b, 96b) for said data packets; and
transferring the data packets to the selected output buffer, for subsequent transmission of the data packets on said at least one link,
wherein data packets are transmitted from the first and second output buffers (26a, 96a; 26b, 96b) with essentially the same output rate.

2. The method of claim 1, wherein at least one of the first and second buffer functions as a queue, wherein data packets placed first in the queue will be transmitted first, in accordance with a first in, first out (FIFO) principle.

3. The method of claim 1 or 2, wherein the data types of the prioritized data types are further assigned a priority value, and wherein the first buffer is operated as a priority queue in which data packets of a data type with higher priority rank are served prior to data packets of a data type of a lower priority rank.

4. The method of any one of the preceding claims, wherein at least two links are provided, wherein data packets from the first and second buffers are transmitted on different links.

5. The method of any one of the preceding claims, wherein the determining if the data stream has a data type belonging to the set of prioritized data types comprises determining at least one of a destination, a size and a pattern of the data stream, and using this for identification of a data type.

6. The method of any one of the preceding claims, wherein the set of prioritized data types does not include video data streams.

7. The method of any one of the preceding claims, wherein the set of prioritized data types includes at least one of a voice-over-IP (VOIP) data stream, a transaction data stream, an authentication data stream and a VPN data stream.

8. The method of any one of the preceding claims, wherein the bandwidth for each data stream being sent through the second buffer is restricted to a maximum bandwidth value.

9. The method of any one of the preceding claims, wherein the stationary communication server is an aggregation server, arranged to aggregate data packets of a stream transmitted on different links, and wherein at least one of the first and second buffer is arranged to transmit data packets on at least two simultaneously useable links.

10. The method of any one of the preceding claims, wherein data streams of data types belonging to the set of prioritized data types have lower amounts of data, and requires lower bandwidth, compared to data streams of data types not belonging to the set of prioritized data types.

11. A wireless communication system for a moving vehicle (1), such as a train, comprising:
at least one router (2) in the moving vehicle (1), said router (2) being configured for receiving and transmitting wireless data communication to and from a stationary communication server (9) outside said moving vehicle (1) through at least one external mobile network (4a, 4b, 4c) on at least one link via at least one antenna (5a, 5b, 5c), wherein at least one of the stationary communication server (9) and the router (2), comprises:
a first output buffer (26a, 96a) and a second output buffer (26b, 96b);
a traffic classifier (25, 95) arranged to analyze received data packets of a data stream (103, 105, 107) to be transferred on said at least one link, and to determine whether said data stream is of a data type belonging to a set of prioritized data types; and
a controller arranged to select, in case it has been determined that the data stream is of a data type belonging to the set of prioritized data types, the first output buffer (26a, 96a) for said data packets, and to select, in case it has been determined that the data stream is of a data type not belonging to the set of prioritized data types, the second output buffer (26b, 96b) for said data packets, and to transfer the data packets to the selected output buffer, for subsequent transmission of the data packets on said at least one link,
wherein data packets are transmitted from the first and second output buffers (26a, 96a; 26b, 96b) with essentially the same output rate.

## Patentansprüche

1. Verfahren zur drahtlosen Kommunikation zwischen einem Router (2) in einem sich bewegenden Fahrzeug (1), wie etwa einem Zug, und einem stationären Kommunikationsserver (9) außerhalb des sich bewegenden Fahrzeugs (1) durch wenigstens ein externes mobiles Netzwerk (4a, 4b, 4c) auf wenigstens einer Verbindung, wobei das Verfahren, das auf wenigstens einem des stationären Kommunikationsservers (9) und des Routers (2) durchgeführt wird, umfasst:
Empfangen von Datenpaketen eines Datenstroms (103, 105, 107), der auf die wenigstens eine Verbindung übertragen werden soll; und
Bestimmen, ob der Datenstrom (103, 105, 107) von einem Datentyp ist, der zu einem Satz priorisierter Datentypen gehört;
**dadurch gekennzeichnet, dass** das Verfahren umfasst:
Bereitstellen eines ersten Ausgabepuffers (26a, 96a) und eines zweiten Ausgabepuffers (26b, 96b);
Auswählen des ersten Ausgabepuffers (26a, 96a) für die Datenpakete in dem Fall, in dem bestimmt wurde, dass der Datenstrom von einem Datentyp ist, der zu dem Satz priorisierter Datentypen gehört;
Auswählen des zweiten Ausgabepuffers (26b, 96b) für die Datenpakete in dem Fall, in dem bestimmt wurde, dass der Datenstrom von einem Datentyp ist, der nicht zu dem Satz priorisierter Datentypen gehört; und
Übertragen der Datenpakete auf den ausgewählten Ausgabepuffer zum anschließenden Übertragen der Datenpakete auf die wenigstens eine Verbindung,
wobei die Datenpakete von dem ersten und dem zweiten Ausgabepuffer (26a, 96a; 26b, 96b) mit im Wesentlichen derselben Ausgaberate übertragen werden.

2. Verfahren nach Anspruch 1, wobei wenigstens einer des ersten und des zweiten Puffers als eine Warteschlange funktioniert, wobei die Datenpakete, die in der ersten Warteschlange angeordnet sind, nach dem FIFO-Grundsatz (First-In, First-Out) als Erstes übertragen werden.

3. Verfahren nach Anspruch 1 oder 2, wobei den Datentypen der priorisierten Datentypen weiterhin ein Prioritätswert zugeordnet wird und wobei der erste Puffer als eine Prioritäts-Warteschlange betrieben wird, in der Datenpakete eines Datentyps mit einem höheren Prioritätsrang vor den Datenpaketen eines Datentyps eines niedrigeren Prioritätsrangs bedient werden.

4. Verfahren nach irgendeinem der vorhergehenden Ansprüche, wobei wenigstens zwei Verbindungen bereitgestellt werden, wobei Datenpakete von dem ersten und dem zweiten Puffer auf unterschiedlichen Verbindungen übertragen werden.

5. Verfahren nach irgendeinem der vorhergehenden Ansprüche, wobei das Bestimmen, ob der Datenstrom einen Datentyp aufweist, der zu dem Satz priorisierter Daten gehört, das Bestimmen wenigstens Eines einer Zielbestimmung, einer Größe und eines Musters des Datenstroms und das Nutzen derselben zum Identifizieren eines Datentyps umfasst.

6. Verfahren nach irgendeinem der vorhergehenden Ansprüche, wobei der Satz priorisierter Datentypen Videodatenströme nicht umfasst.

7. Verfahren nach irgendeinem der vorhergehenden Ansprüche, wobei der Satz priorisierter Datentypen wenigstens Eines von einem Voice-Over-IP-Datenstrom (VOIP-Datenstrom), eines Transaktionsdatenstroms, eines Authentifizierungs-Datenstroms und eines VNP-Datenstroms umfasst.

8. Verfahren nach irgendeinem der vorhergehenden Ansprüche, wobei die Bandbreite für jeden Datenstrom, der durch den zweiten Puffer gesendet wird, auf einen maximalen Bandbreitenwert beschränkt wird.

9. Verfahren nach irgendeinem der vorhergehenden Ansprüche, wobei der stationäre Kommunikationsserver ein Aggregationsserver ist, der zum Aggregieren von Datenpaketen eines Stroms angeordnet ist, der auf unterschiedlichen Verbindungen übertragen wird, und wobei wenigstens einer des ersten und des zweiten Puffers angeordnet ist, um Datenpakete auf wenigstens zwei gleichzeitig verwendbaren Verbindungen zu übertragen.

10. Verfahren nach irgendeinem der vorhergehenden Ansprüche, wobei Datenströme von Datentypen, die zu dem Satz priorisierter Datentypen gehören, im Vergleich zu Datenströmen von Datentypen, die nicht zu dem Satz priorisierter Datentypen gehören, geringere Datenmengen aufweisen und eine geringere Bandbreite erfordern.

11. Drahtloses Kommunikationssystem für ein sich bewegendes Fahrzeug (1), wie z. B. einen Zug, umfassend:
wenigstens einen Router (2) in dem sich bewegenden Fahrzeug (1), wobei der Router (2) zum Empfangen und Übertragen von drahtloser Datenkommunikation zu und von einem stationären Kommunikationsserver (9) außerhalb des sich bewegenden Fahrzeugs (1) durch wenigstens ein externes mobiles Netzwerk (4a, 4b, 4c) auf wenigstens einer Verbindung über wenigstens eine Antenne (5a, 5b, 5c) ausgestaltet ist, wobei wenigstens Einer des stationären Kommunikationsservers (9) und des Routers (2) umfasst:
einen ersten Ausgabepuffer (26a, 96a) und einen zweiten Ausgabepuffer (26b, 96b);
einen Traffic-Klassifikator (25, 95), der zum Analysieren von empfangenen Datenpaketen eines Datenstroms (103, 105, 107), der auf der wenigstens einen Verbindung übertragen werden soll, und zum Bestimmen, ob der Datenstrom aus einem Datentyp gebildet ist, der zu einem Satz priorisierter Datentypen gehört, angeordnet ist; und
eine Steuerung, die zum Auswählen des ersten Ausgabepuffers (26a, 96a) für die Datenpakte in dem Fall, dass bestimmt wurde, dass der Datenstrom von einem Datentyp ist, der zu dem Satz priorisierter Datentypen gehört, und zum Auswählen des zweiten Ausgabepuffers (26b, 96b) für die Datenpakete in dem Fall, dass bestimmt wurde, dass der Datenstrom von einem Datentyp ist, der nicht zu dem Satz priorisierter Datentypen gehört, und zum Übertragen der Datenpakete auf den ausgewählten Ausgabepuffer zum anschließenden Übertragen der Datenpakete auf die wenigstens eine Verbindung angeordnet ist,
wobei Datenpakete von dem ersten und dem zweiten Ausgabepuffer (26a, 96a; 26b, 96b) mit im Wesentlichen derselben Ausgaberate übertragen werden.

## Revendications

1. Procédé de communication sans fil entre un routeur (2) dans un véhicule en mouvement (1), tel qu'un train, et un serveur de communication stationnaire (9) à l'extérieur du véhicule en mouvement (1) par l'intermédiaire d'au moins un réseau mobile externe (4a, 4b, 4c) sur au moins une liaison, le procédé, mis en œuvre dans au moins un du serveur de communication stationnaire (9) et du routeur (1), comprenant :
la réception de paquets de données d'un flux de données (103, 105, 107) à transférer sur ladite au moins une liaison ; et
la détermination si ledit flux de données (103, 105, 107) est d'un type de données appartenant à un ensemble de types de données priorisés ;
**caractérisé en ce que** le procédé comprend :
la fourniture d'une première mémoire tampon de sortie (26a, 96a) et d'une deuxième mémoire tampon de sortie (26b, 96b) ;
la sélection, au cas où il a été déterminé que le flux de données est d'un type de données appartenant à l'ensemble de types de données priorisés, de la première mémoire tampon de sortie (26a, 96a) pour lesdits paquets de données ;
la sélection, au cas où il a été déterminé que le flux de données est d'un type de données n'appartenant pas à l'ensemble de types de données priorisés, de la deuxième mémoire tampon de sortie (26b, 96b) pour lesdits paquets de données ; et
le transfert des paquets de données vers la mémoire tampon sélectionnée, en vue d'une transmission successive des paquets de données sur ladite au moins une liaison ;
dans lequel les paquets de données sont transmis à partir de la première et la deuxième mémoire tampon de sortie (26a, 96a ; 26b, 96b) avec essentiellement le même débit de sortie.

2. Procédé selon la revendication 1, dans lequel au moins une de la première et de la deuxième mémoire tampon fonctionne comme une file d'attente, dans lequel les paquets de données placées en premier dans la file d'attente seront transmis en premier, conformément au principe premier entré, premier sorti (FIFO).

3. Procédé selon la revendication 1 ou 2, dans lequel les types de données des types de données priorisés se voient en outre assigner une valeur de priorité et dans lequel la première mémoire tampon fonctionne comme une file d'attente à priorité dans laquelle des paquets de données d'un type de données avec un ordre de priorité plus élevé sont desservis avant les paquets de données d'un type de données à ordre de priorité plus bas.

4. Procédé selon une quelconque des revendications précédentes, dans lequel au moins deux liaisons sont prévues, dans lequel les paquets de données provenant de la première et la deuxième mémoire tampon sont transmis sur des liaisons différentes.

5. Procédé selon une quelconque des revendications précédentes, dans lequel la détermination si le flux de données a un type de données appartenant à l'ensemble de types de données priorisés comprend la détermination d'au moins un d'une destination, une taille et un modèle de flux de données et l'utilisation de ceci pour l'identification d'un type de données.

6. Procédé selon une quelconque des revendications précédentes, dans lequel l'ensemble de types de données priorisés n'inclut pas des flux de données vidéo.

7. Procédé selon une quelconque des revendications précédentes, dans lequel l'ensemble de types de données priorisés comprend au moins un d'un flux de données voix sur IP (VOIP), un flux de données de transaction, un flux de données d'authentification et un flux de données VPN.

8. Procédé selon une quelconque des revendications précédentes, dans lequel la bande passante pour chaque flux de données étant envoyé par l'intermédiaire de la deuxième mémoire tampon est restreinte à une valeur de bande passante maximale.

9. Procédé selon une quelconque des revendications précédentes, dans lequel le serveur de communication stationnaire est un serveur d'agrégation, agencé pour agréger les paquets de données d'un flux transmis sur des liaisons différentes et dans lequel au moins une de la première et de la deuxième mémoire tampon est agencée pour transmettre des paquets de données sur au moins deux liaisons utilisables simultanément.

10. Procédé selon une quelconque des revendications précédentes, dans lequel les flux de données de types de données appartenant à l'ensemble de types de données priorisés ont des quantités de données plus basses et nécessitent une plus faible bande passante, comparé aux flux de données des types de données n'appartenant pas à l'ensemble de types de données priorisés.

11. Système de communication sans fil pour un véhicule en mouvement (1), tel qu'un train, comprenant :
au moins un routeur (2) dans le véhicule en mouvement (1), ledit routeur (2) étant configuré pour recevoir et transmettre une communication de données sans fil vers et depuis un serveur de communication stationnaire (9) à l'extérieur dudit véhicule en mouvement (1) par l'intermédiaire d'au moins un réseau mobile externe (4a, 4b, 4c) sur au moins une liaison via au moins une antenne (5a, 5b, 5c), dans lequel au moins un du serveur de communication stationnaire (9) et du routeur (2) comprend :
une première mémoire tampon de sortie (26a, 96a) et une deuxième mémoire tampon de sortie (26b, 96b) ;
un classificateur de trafic (25, 95) agencé pour analyser des paquets de données reçus d'un flux de données (103, 105, 107) à transférer sur ladite au moins une liaison et déterminer si ledit flux de données est d'un type de données appartenant à un ensemble de types de données priorisés ; et
un contrôleur agencé pour sélectionner, au cas où il a été déterminé que le flux de données est d'un type de données appartenant à l'ensemble de types de données priorisés, la première mémoire tampon de sortie (26a, 96a) pour lesdits paquets de données et sélectionner, au cas où il a été déterminé que le flux de données est d'un type de données n'appartenant pas à l'ensemble de types de donnée priorisés, la deuxième mémoire tampon de sortie (26b, 96b) pour lesdits paquets de données et transférer les paquets de données par la mémoire tampon sélectionnée, en vue d'une transmission successive des paquets de données sur ladite au moins une liaison,
dans lequel les paquets de données sont transmis à partir de la première et la deuxième mémoire tampon de sortie (26a, 96a ; 26b, 96b) avec essentiellement le même débit de sortie.
